# EUROPEAN PATENT APPLICATION

(11) **EP 4 803 987 A1**
(43) Date of publication of application: **09.09.2026**
(21) Application number: 25202546.5
(22) Date of filing: 16.09.2025
(51) Int. Cl.: G06F 3/041, G06F 3/044

(54) **TOUCH SENSING CIRCUIT AND RELATED TOUCH SENSITIVE DEVICE WITH NOISE CANCELLATION CAPABILITIES**

(30) Priority: 02.03.2025 US 202519067979
(71) Applicant: Himax Technologies Limited, Tainan City 74148 (TW)
(72) Inventor: Chang, Yaw-Guang, 74148 Tainan City (TW); He, Jia-Ming, 74148 Tainan City (TW); Tsai, Yi-Yang, 74148 Tainan City (TW)
(74) Representative: Straus, Alexander

(57) **Abstract**

A touch sensing circuit (13, 23) includes a plurality of receiving circuits (150_1-150_P, 250_1-250_P). Each of the plurality of receiving circuits (150_1-150_P, 250_1-250_P) is coupled to a respective one of a plurality of sensing electrodes (RX_1-RX_K) of a touch panel (11, 21), and comprises: a preceding integrator (152_M) and a following integrator (154_M). The preceding integrator (152_M) is coupled to the respective one of the plurality of sensing electrodes (RX_M), and configured to generate a first integration signal (INTS1_M). The following integrator (154_M) is coupled to the preceding integrator (152_M), and configured to generate a second integration signal based on the first integration signal (INTS1_M) generated by the preceding integrator (152_M) in a same receiving circuit (150_M), and the first integration signal (INTS1_(M-1)) generated by the preceding integrator (152_(M-1)) in an adjacent receiving circuit (150_(M-1)).

## Description

### Field of the Invention

The present invention relates to touch sensing, and more particularly to a touch sensing circuit and a related touch sensitive device with noise cancellation capabilities.

### Background of the Invention

In modern electronic devices, touch sensing circuits have become an essential component, particularly in mobile devices/phones. As mobile devices/phones continue to evolve towards increasingly thinner profiles, the physical distance between touch panels and display panels has significantly decreased. This decreasing in spacing has led to a substantial increase in parasitic capacitance between the touch panels and display panels, resulting in heightened noise susceptibility of touch sensing circuits.

The challenge of noise interference is particularly pronounced in recently developed foldable phones that utilize flexible active-matrix organic light-emitting diode (AMOLED) display panels. While conventional display panels typically introduce parasitic capacitance values in the range of tens of picofarads (pF), flexible AMOLED display panels can introduce parasitic capacitance values of 500pF to 1000pF. This substantial increase in parasitic capacitance amplifies the noise interference, potentially resulting in noise levels several times higher than those introduced by conventional display panels.

As the noise interference poses a significant challenge to the accurate detection and processing of touch signals, particularly in flexible AMOLED implementations where the noise susceptibility is inherently higher due to their structural characteristics, there exists a need for improved noise cancellation techniques in touch sensing circuits.

### Summary of the Invention

With this in mind, it is one object of the present invention to provide a novel approach to noise cancellation by reducing common part in signals received across receiving circuits in a touch sensing circuit. The present invention can effectively eliminate noise interference and baseline capacitances, and enhance signal quality, thereby improving the overall performance and reliability of touch sensing systems in modern mobile devices/phones.

This is achieved by a touch sensing circuit according to claim 1, and a touch sensitive device according to claim 8. The dependent claims pertain to corresponding further developments and improvements.

As will be seen more clearly from the detailed description following below, a touch sensing circuit is provided. The touch sensing circuit comprises a plurality of receiving circuits. Each of the plurality of receiving circuits is coupled to a respective one of a plurality of sensing electrodes of a touch panel. Each of the plurality of receiving circuits comprises: a preceding integrator and a following integrator. The preceding integrator is, coupled to the respective one of the plurality of sensing electrodes and configured to generate a first integration signal. The following integrator is coupled to the preceding integrator and configured to generate a second integration signal based on the first integration signal generated by the preceding integrator in a same receiving circuit, and the first integration signal generated by the preceding integrator in an adjacent receiving circuit.

As will be seen more clearly from the detailed description following below, a touch sensitive device is provided. The touch sensitive device comprises a display panel, a touch panel and a touch sensing circuit. The touch sensing circuit comprises a plurality of receiving circuits. Each of the plurality of receiving circuits is coupled to a respective one of a plurality of sensing electrodes of the touch panel. Each of the plurality of receiving circuits comprises: a preceding integrator and a following integrator. The preceding integrator is, coupled to the respective one of the plurality of sensing electrodes and configured to generate a first integration signal. The following integrator is coupled to the preceding integrator and configured to generate a second integration signal based on the first integration signal generated by the preceding integrator in a same receiving circuit, and the first integration signal generated by the preceding integrator in an adjacent receiving circuit.

### Brief Description of the Drawings

FIG. 1 illustrates an overview of a touch sensitive device according to one embodiment of the present invention.
FIG. 2 illustrates a schematic diagram of receiving circuits of a touch sensing circuit according to one embodiment of the present invention.
FIG. 3 illustrates a first implementation of receiving circuits according to one embodiment of the present invention.
FIG. 4 illustrates a second implementation of receiving circuits according to one embodiment of the present invention.
FIG. 5 illustrates a third implementation of receiving circuits according to one embodiment of the present invention.
FIG. 6 illustrates a schematic diagram of a self-capacitance touch sensitive device for use in TDDI applications.
FIG. 7 illustrates a schematic diagram of receiving circuits shown by FIG. 6 according to one embodiment of the present invention.

### Detailed Description

In the following description, numerous specific details are set forth in order to provide a thorough understanding of the present embodiments. It will be apparent, however, to one having ordinary skill in the art that the specific detail need not be employed to practice the present embodiments. In other instances, well-known materials or methods have not been described in detail in order to avoid obscuring the present embodiments.

Reference throughout this specification to "one embodiment" or "an embodiment" means that a particular feature, structure or characteristic described in connection with the embodiment or example is included in at least one embodiment of the present embodiments. Thus, appearances of the phrases "in one embodiment" or "in an embodiment" in various places throughout this specification are not necessarily all referring to the same embodiment. Furthermore, the particular features, structures or characteristics may be combined in any suitable combinations and/or sub-combinations in one or more embodiments.

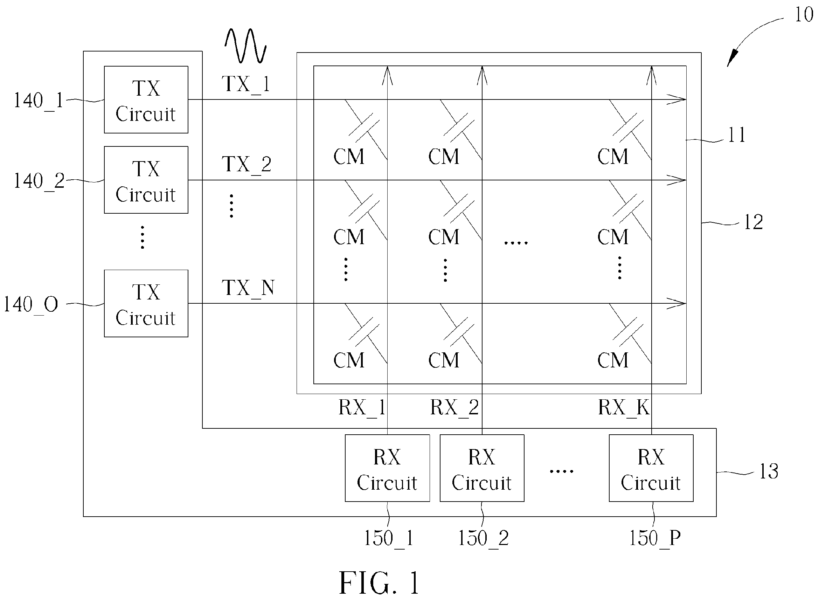

Please refer to FIG. 1, illustrates an overview of a touch sensitive device 10 according to one embodiment of the present invention. As illustrated, a touch sensitive device 10 comprises a touch panel 11, a display panel 12 and a touch sensing circuit 13. The touch panel 11 comprises a plurality of driving electrodes TX_1-TX_N and a plurality of sensing electrodes RX_1-RX_K. The driving electrodes TX_1-TX_N and the sensing electrodes RX_1-RX_K are disposed on the display panel 12. The driving electrodes TX_1-TX_N and the sensing electrodes RX_1-RX_K can be formed from transparent conductive materials. Preferably, the driving electrodes TX_1-TX_N and the sensing electrodes RX_1-RX_K can be perpendicular to each other, thereby forming a coordinate system and each coordinate location comprises a mutual capacitor CM formed at the intersection of the driving electrodes TX_1-TX_N and the sensing electrodes RX_1-RX_K. The sensing electrodes RX_1-RX_K are used to detect a change in capacitance of the mutual capacitor CM due to a touch event performed over the display panel 12. According to various embodiments, the display panel 12 could be a flexible AMOLED display panel, a liquid crystal display (LCD) or an organic light emitting diode (OLED) display panel.

The touch sensing circuit 13 comprises a plurality of transmitting circuits 140_1-140_O and a plurality of receiving circuits 150_1-150_P. The driving electrodes TX_1-TX_N are coupled to outputs of the transmitting circuits 140_1-140_O, while the sensing electrodes RX_1-RX_K are coupled to inputs of the receiving circuits 150_1-150_P. According to various embodiments, the number of the transmitting circuits 140_1-140_O may be different from or identical to the number of the driving electrodes TX_1-TX_N, while the number of the receiving circuits 150_1-150_P may be different from or identical to the sensing electrodes RX_1-RX_K.

For example, in a time-division manner, one transmitting circuit may be multiplexed to sequentially drive multiple driving electrodes, or one receiving circuit may be multiplexed to sequentially receive sensing signals from multiple sensing electrodes. This multiplexing scheme allows for reduced circuit complexity and component count while maintaining touch sensing functionality across the entire sensing area. The timing of the multiplexing can be controlled by the control circuit to ensure proper synchronization between the transmitting and receiving operations.

Moreover, the transmitting circuits 140_1-140_O and the receiving circuits 150_1-150_P may be fabricated onto a single integrated circuit chip (IC) device or discrete IC chips. Each of the transmitting circuits 140_1-140_O is coupled to respective one or more of the driving electrodes TX_1-TX_N, providing driving signals having sinusoid characteristics that drives driving electrodes TX_1-TX_N. Accordingly, charges can be transferred to sensing electrodes RX_1-RX_K via the mutual capacitors CM.

During touch sensing operation of the touch sensing circuit 13, noises could be randomly coupled to the sensing control circuit 140 through parasitic capacitances between the touch panel 11 and the display panel 12. Therefore, the touch sensing circuit 13 is designed and operable to exclude the interference caused by the display panel 12.

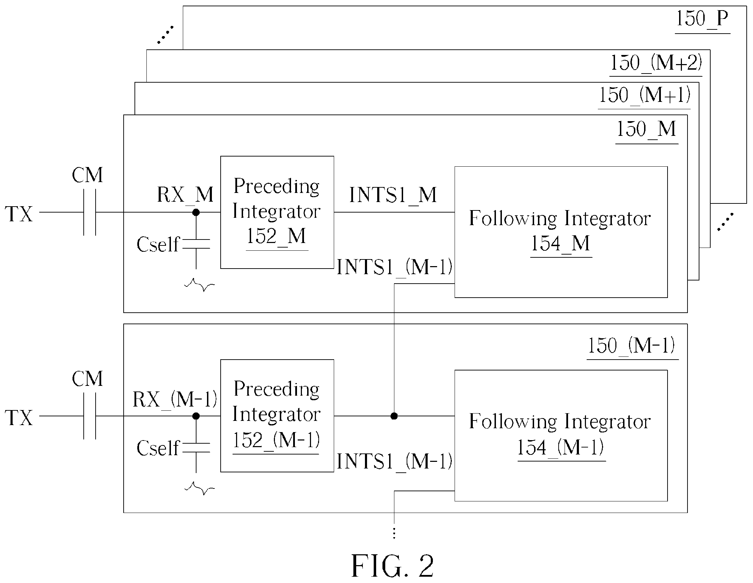

Please refer to FIG. 2, which illustrates a schematic diagram of receiving circuits of a touch sensing circuit according to one embodiment of the present invention. As depicted, each of receiving circuits 150_1-150_P includes a preceding integrator 152_i and a following integrator 154_i. The preceding integrator 152_i is configured to generate a first integration signal INTS1_i in response to charges from a corresponding mutual capacitor CM. The following integrator 154_i is coupled to the preceding integrator 152_i, and configured to generate a second integration signal INTS2_i based on the first integration signal INTS1_i generated by the preceding integrator 152_i in a same receiving circuit, and the first integration signal INTS1_(i-1) generated by the preceding integrator 152_(i-1) in an adjacent receiving circuit. For example, in a receiving circuit 150_M, the preceding integrator 152_M first generates the first integration signal INTS1_M. Accordingly, the following integrator 154_k generates the second integration signal, based on the first integration signal INTS1_M generated by the preceding integrator 152_k in the same receiving circuit 150_M and the first integration signal INTS1_(M-1) generated by the preceding integrator 152_(M-1) in the adjacent receiving circuit 150_(M-1). Since the noise coupled to the adjacent two receiving circuits through parasitic capacitances Cself would be very close, the noise can be effectively cancelled at the following integrator 154_i.

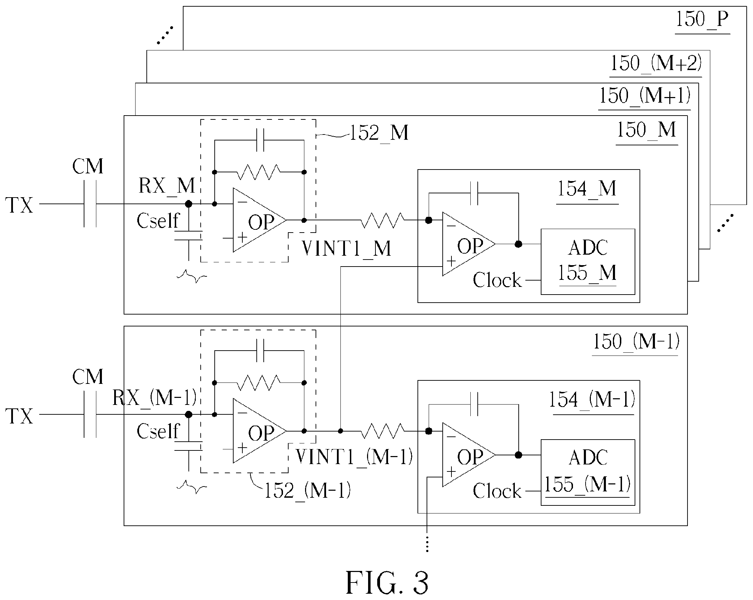

Please refer to FIG. 3, which illustrates a first implementation of receiving circuits according to one embodiment of the present invention. In the first implementation shown by FIG. 3, each of the preceding integrator 152_i comprises an operational amplifier OP and a parallel combination of a resistor and a capacitor. In addition, each of the following integrator 154_i comprises operational amplifier OP in a parallel connection with a capacitor, and an analog-to-digital converter (ADC) 155_i (for reading out a digital value of charges).

In the first implementation, each of the preceding integrator 152_i (e.g., 152_M) is configured to generate a first integration voltage VINT1_i (e.g., VINT1_M) in response to charges from a corresponding mutual capacitor CM. Each of the following integrator 154_i (e.g., 154_M) is configured to generate an second integration voltage based on (a difference between) the first integration voltage VINT1_i (e.g., VINT1_M) generated by the preceding integrator 152_i (e.g., 152_M) in a same receiving circuit and the first integration voltage VINT1_(i-1) (e.g., VINT1_(M-1)) generated by the preceding integrator 152_(i-1) (e.g., 152_(M-1)) in an adjacent receiving circuit (e.g., 150_(M-1)). Accordingly, the following integrator 154_i (e.g., 154_M) generates a digital value through the ADC 155_i (e.g., 155_M) in response to the second integration voltage. Since the noise coupled to the adjacent two receiving circuits through parasitic capacitances Cself would be very close, the noise can be effectively cancelled at the following integrator 154_i.

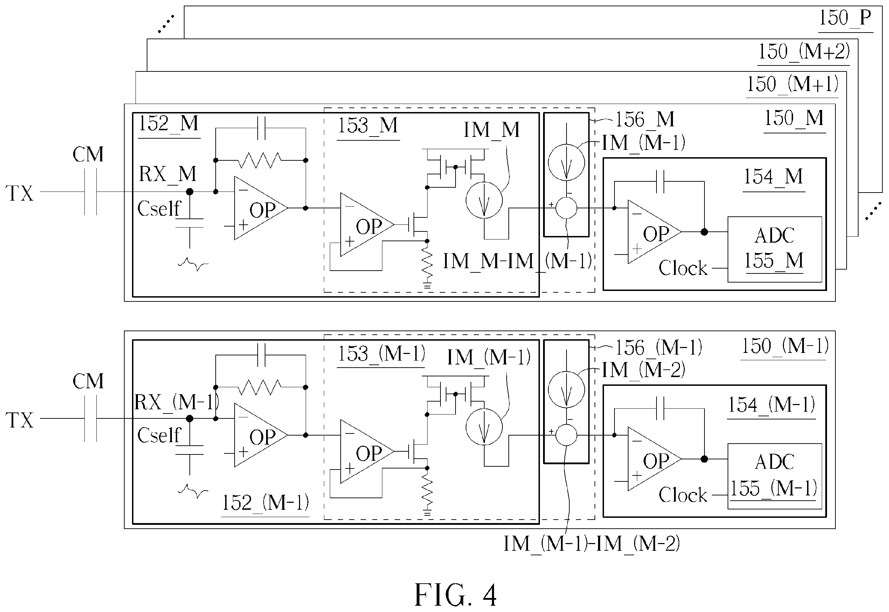

Please refer to FIG. 4, which illustrates a second implementation of receiving circuits according to one embodiment of the present invention. In the second implementation shown by FIG. 4, each of the preceding integrator 152_i comprises an operational amplifier OP and a parallel combination of a resistor and a capacitor, and a current-to-voltage converter 153_i. In addition, each of the following integrator 154_i comprises operational amplifier OP in a parallel connection with a capacitor and an analog-to-digital converter 155_i (for reading out a digital value of charges).

In the second implementation, each of the preceding integrator 152_i (e.g., 152_M) is configured to firstly generate a first integration voltage in response to charges from a corresponding mutual capacitor CM. Then, the first integration voltage is converted into a first integration current IM_i (e.g., IM_M) through the current-to-voltage converter 153_i (e.g., 153_M).

A current mirror circuit 156_i (e.g., 156_M) positioned between the preceding integrator 152_i (e.g., 152_M) and the following integrator 154_i (e.g., 154_M) is configured to mirror the first integration current IM_(i-1) (e.g., IM_(M-1))that is generated by the preceding integrator 152_(i-1) (e.g., 152_(M-1)) in an adjacent receiving circuit (e.g., 150_(M-1)) and accordingly generate a current difference (e.g., IM_M-IM_(M-1)) between the first integration current IM_i (e.g., IM_M) from the same receiving circuit (e.g., 150_M) and the first integration current IM_(i-1) (e.g., IM_(M-1)) from the adjacent receiving circuit (e.g., 150_(M-1)).

Moreover, each of the following integrator 154_i is configured to firstly generate a second integration voltage based on the current difference between the first integration current IM_i and the first integration current IM_(i-1). Accordingly, the following integrator 154_i generates a digital value through the ADC 155_i in response to the second integration voltage.

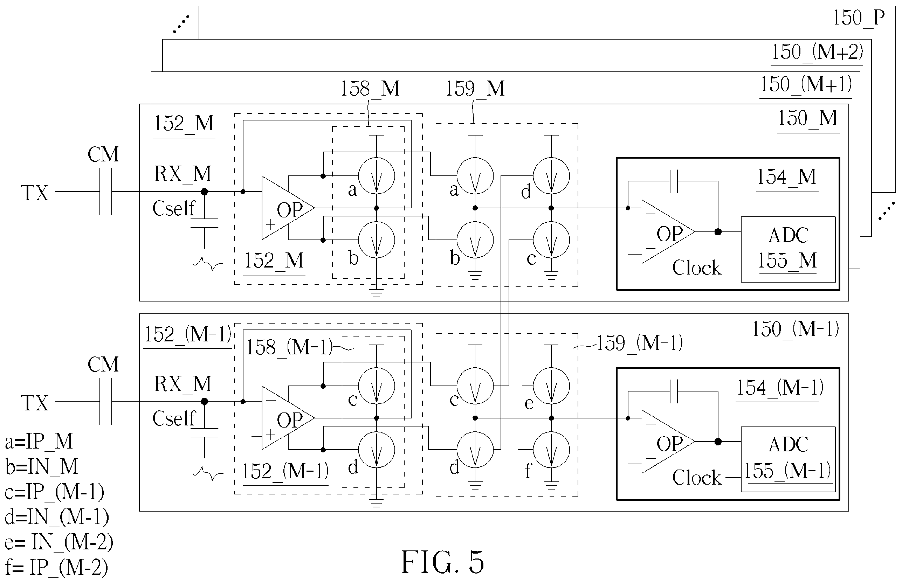

Please refer to FIG. 5, which illustrates a third implementation of receiving circuits according to one embodiment of the present invention. In the second implementation shown by FIG. 5, each of the preceding integrator 152_i comprises an operational amplifier OP and a current buffer 158_i In addition, each of the following integrator 154_i comprises operational amplifier OP in a parallel connection with a capacitor and an analog-to-digital converter 155_i (for reading out a digital value of charges). In the third implementation, the current buffer 158_i (e.g., 158_M) generates a first non-inverted integration current IP_i (e.g., IP_M which is denoted as "a" in FIG. 5) and a first inverted integration current IN_i (e.g., IN_M which is denoted as "b" in FIG. 5) in response to charges from the mutual capacitor CM.

In addition, each current mirror circuit 159_i (e.g., 159_M) is positioned between the preceding integrator 152_i (e.g., 152_M) and the following integrator 154_i (e.g., 154_M). Specifically, the current mirror circuit 159_i (e.g., 159_M) is configured to mirror the first non-inverted integration current IP_i (e.g., IP_M which is denoted as "a" in FIG. 5) and the first inverted integration current IN_i (e.g., IN_M which is denoted as "b" in FIG. 5) that are generated by the preceding integrator 152_i (e.g., 152_M) in the same receiving circuit (e.g., 150_M), and configured to inversely mirror the first non-inverted integration current IP_(i-1) (e.g., IP_(M-1) which is denoted as "c" in FIG. 5 or IP_(M-2) which is denoted as "f" in FIG. 5) and the first inverted integration current IN_(i-1) (e.g., IN_(M-1) which is denoted as "d" in FIG. 5 or IP_(M-2) which is denoted as "e" in FIG. 5) that are generated by the preceding integrator 152_(i-1) (e.g., 152_(M-1)) in an adjacent receiving circuit (e.g., 150_(M-1)).

Accordingly, the current mirror circuit 159_i ((e.g., 159_M)) generates a current difference between a sum of the first non-inverted integration current IP_i (e.g., IP_M denoted as "a" in FIG. 5) and the first inverted integration current IN_i (e.g., IN_M denoted as "b" in FIG. 5), and a sum of the first non-inverted integration current IP_(i-1) (e.g., IP_(M-1) denoted as "c" in FIG. 5) and the first inverted integration current IN_(i-1) (e.g., IN_(M-1) denoted as "d" in FIG. 5).

Moreover, each of the following integrator 154_i is configured to firstly generate a second integration voltage based on the current difference generated by current mirror circuit 158_i and accordingly generates a digital value through the ADC 155_i in response to the second integration voltage.

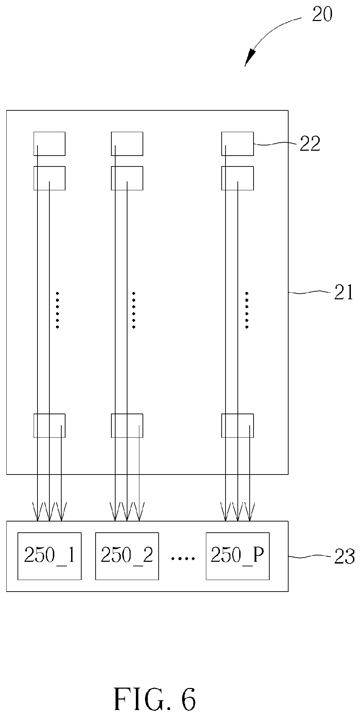

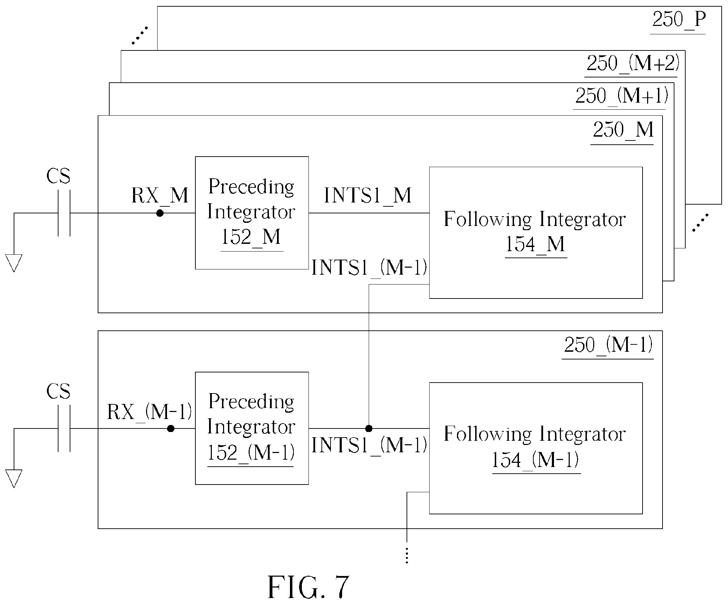

In the above-mentioned embodiments, the present invention is described with mutual-capacitance touch sensitive device 10. However, this is not a limitation of the present invention. According to various embodiments, the present invention can be applicable to self-capacitance touch sensitive devices. Please refer to FIG. 6 and FIG. 7 for further understandings. FIG. 6 illustrates a schematic diagram of a self-capacitance touch sensitive device for use in touch and display drier integration (TDDI) applications. In a self-capacitance touch sensitive device 20 for use in TDDI applications, a touch panel 21 comprises a plurality of sensor blocks 22 that are respectively coupled to a plurality of receiving circuits 250_1-250_P of a touch sensing circuit 23. In the self-capacitance touch sensitive devices, charges from a self-capacitor CS will be sensed by operational amplifier in integrators within the receiving circuits 250_1-250_P.

As shown by FIG. 7, each of the receiving circuits 250_1-250_P could comprise a preceding integrator 152_i and a following integrator 154_i, wherein the noises coupled to the adjacent two of the receiving circuits 250_1-250_P can be effectively cancelled at the following integrator 154_i since the noise would be very close.

It should be noted that the noise cancellation approach described herein effectively eliminates not only the noise introduced by the display panel but also various external noise sources coupled to the touch sensitive device. The approach provided by the present invention provides comprehensive noise immunity against both systematic and environmental interference sources. Furthermore, the present invention method is also capable of eliminating baseline capacitances inherent to the touch panel, thereby retaining capacitance variations caused by touch events. This reduction in the dynamic range requirements of the ADC leads to improved signal-to-noise ratio (SNR) performance of the touch sensitive device.

Moreover, the present invention is applicable to various combinations of touch panel and display panel technologies. While demonstrated with the flexible AMOLED display panel and the mutual-capacitance touch panel, the present invention can be effectively implemented in TDDI systems incorporating OLED or LCD panels with self-capacitance touch panels. Additionally, the present invention is compatible with hybrid touch panels utilizing both mutual-capacitance and self-capacitance sensing modes, enabling noise cancellation and baseline capacitance elimination across different sensing architectures, thereby enhancing the overall SNR performance of the ADC.

Embodiments in accordance with the present embodiments can be implemented as an apparatus, method, or computer program product. Accordingly, the present embodiments may take the form of an entirely hardware embodiment, an entirely software embodiment, or an embodiment combining software and hardware aspects that can all generally be referred to herein as a "module" or "system." Furthermore, the present embodiments may take the form of a computer program product embodied in any tangible medium of expression having computer-usable program code embodied in the medium. In terms of hardware, the present invention can be accomplished by applying any of the following technologies or related combinations: an individual operation logic with logic gates capable of performing logic functions according to data signals, and an application specific integrated circuit (ASIC), a programmable gate array (PGA) or a field programmable gate array (FPGA) with a suitable combinational logic.

The flowchart and block diagrams in the flow diagrams illustrate the architecture, functionality, and operation of possible implementations of systems, methods, and computer program products according to various embodiments of the present embodiments. In this regard, each block in the flowchart or block diagrams may represent a module, segment, or portion of code, which comprises one or more executable instructions for implementing the specified logical function(s). It is also noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions. These computer program instructions can be stored in a computer-readable medium that directs a computer or other programmable data processing apparatus to function in a particular manner, such that the instructions stored in the computer-readable medium produce an article of manufacture including instruction means which implement the function/act specified in the flowchart and/or block diagram block or blocks.

## Claims

1. A touch sensing circuit (13, 23), **characterized by:**
a plurality of receiving circuits (150_1-150_P, 250_1-250_P), each coupled to a respective one of a plurality of sensing electrodes (RX_1-RX_K) of a touch panel (11, 21), each of the plurality of receiving circuits (150_1-150_P, 250_1-250_P) comprising:
a preceding integrator (152_M), coupled to the respective one of the plurality of sensing electrodes (RX_M), configured to generate a first integration signal (INTS1_M); and
a following integrator (154_M), coupled to the preceding integrator (152_M), configured to generate a second integration signal based on the first integration signal (INTS1_M) generated by the preceding integrator (152_M) in a same receiving circuit (150_M), and the first integration signal (INTS1_(M-1)) generated by the preceding integrator (152_(M-1)) in an adjacent receiving circuit (150_(M-1)).

2. The touch sensing circuit (13, 23) of claim 1, **characterized in that** the preceding integrator (152_M, 152_(M-1)) comprises:
a first operational amplifier (OP), coupled to the respective one of the plurality of sensing electrodes (RX_M, RX_(M-1)), configured to generate a first integration voltage (VINT1_M, VINT1_(M-1)).

3. The touch sensing circuit (13, 23) of claim 2, **characterized in that** the following integrator (154_M, 154_(M-1)) comprises:
a second operational amplifier (OP), coupled to the first operational amplifier (OP), configured to generate a second integration voltage based on the first integration voltage (VINT1_M) generated by the preceding integrator (152_M) in the same receiving circuit (150_M) and the first integration voltage (VINT1_(M-1)) generated by the preceding integrator (152_(M-1)) in the adjacent receiving circuit (150_(M-1)); and
an analog-to-digital converter (155_M, 155_(M-1)), coupled to the second operational amplifier (OP), configured to generate a digital value based on the second integration voltage.

4. The touch sensing circuit (13, 23) of claim 3, **characterized in that** the preceding integrator (152_M, 152_(M-1)) further comprises:
a voltage to current converting circuit (153_M, 153_(M-1)), coupled to the first operational amplifier (OP), configured to generate a first integration current (IM_M, IM_(M-1)) by converting the first integration voltage.

5. The touch sensing circuit (13, 23) of claim 4, **characterized in that** each of the plurality of receiving circuits (150_M) further comprises:
a current mirror circuit (156_M), coupled between the preceding integrator (152_M) and the following integrator (154_M), configured to mirror the first integration current (IM_(M-1)) that is generated by the preceding integrator (152_(M-1)) in the adjacent receiving circuit (150_(M-1)) and accordingly generate a current difference (IM_M-IM_(M-1)) between the first integration current (IM_M) generated by the preceding integrator (152_M) in the same receiving circuit (150_M) and the first integration current (IM_(M-1)) generated by the preceding integrator (152_(M-1)) in the adjacent receiving circuit (150_(M-1));
wherein the second operational amplifier (OP) is configured to generate the second integration voltage based on the current difference (IM_M-IM_(M-1)).

6. The touch sensing circuit of (13, 23) claim 3, **characterized in that** the preceding integrator (152_M, 152_(M-1)) further comprises:
a current buffer (158_M, 158_(M-1)), coupled to the first operational amplifier (OP), configured to generate a first non-inverted integration current (IP_M, IP_(M-1)) and a first inverted integration current (IN_M, IN_(M-1)) based on outputs of the first operational amplifier (OP).

7. The touch sensing circuit (13, 23) of claim 6, **characterized in that** each of the plurality of receiving circuit (150_M, 150_(M-1)) further comprises:
a current mirror circuit (159_M), coupled between the preceding integrator (152_M) and the following integrator (154_M), configured to:
mirror the first non-inverted integration current (IP_M) and the first inverted integration current (IN_M) that are generated by the preceding integrator (152_M) in the same receiving circuit (150_M);
inversely mirror the first non-inverted integration current (IP_(M-1)) and the first inverted integration current (IN_(M-1)) that are generated by the preceding integrator (152_(M-1)) in the adjacent receiving circuit (150_(M-1)); and
accordingly generate a current difference between a sum of the first non-inverted integration current (IP_M) and the first inverted integration current (IN_M) that are generated by the preceding integrator (152_M) in the same receiving circuit (150_M), and a sum of the first non-inverted integration current (IP_(M-1)) and the first inverted integration current (IN_(M-1)) that are generated by the preceding integrator (152_(M-1)) in the adjacent receiving circuit (150_(M-1));
wherein the second operational amplifier (OP) is configured to generate the second integration voltage based on the current difference.

8. A touch sensitive device (10, 20), comprising:
a display panel (12);
a touch panel (11, 21) having a plurality of sensing electrodes (RX_1-RX_K); and
a touch sensing circuit (13, 23), comprising:
a plurality of receiving circuits, each coupled to a respective one of the plurality of sensing electrodes (RX_1-RX_K), each of the plurality of receiving circuits (150_1-150_P, 250_1-250_P) comprising:
a preceding integrator (152_M), coupled to the respective one of the plurality of sensing electrodes (RX_M), configured to generate a first integration signal (INTS1_M); and
a following integrator (154_M), coupled to the preceding integrator (152_M), configured to generate a second integration signal based on the first integration signal (INTS1_M) generated by the preceding integrator (152_M) in a same receiving circuit (150_M), and the first integration signal (INTS1_(M-1)) generated by the preceding integrator (152_(M-1)) in an adjacent receiving circuit (150_(M-1)).

9. The touch sensitive device (10, 20) of claim 8, **characterized in that** the preceding integrator (152_M, 152_(M-1)) comprises:
a first operational amplifier (OP), coupled to the respective one of the plurality of sensing electrodes (RX_M, RX_(M-1)), configured to generate a first integration voltage (VINT1_M, VINT1_(M-1)).

10. The touch sensitive device (10, 20) of claim 9, **characterized in that** the following integrator (154_M, 154_(M-1)) comprises:
a second operational amplifier (OP), coupled to the first operational amplifier (OP), configured to generate a second integration voltage based on the first integration voltage (VINT1_M) generated by the preceding integrator (152_M) in the same receiving circuit (150_M) and the first integration voltage (VINT1_(M-1)) generated by the preceding integrator (152_(M-1)) in the adjacent receiving circuit (150_(M-1)); and
an analog-to-digital converter (155_M, 155_(M-1)), coupled to the second operational amplifier (OP), configured to generate a digital value based on the second integration voltage.

11. The touch sensitive device (10, 20) of claim 10, **characterized in that** the preceding integrator (152_M, 152_(M-1)) further comprises:
a voltage to current converting circuit (153_M, 153_(M-1)), coupled to the first operational amplifier (OP), configured to generate a first integration current (IM_M, IM_(M-1)) by converting the first integration voltage.

12. The touch sensitive device of claim 11, **characterized in that** each of the plurality of receiving circuits (150_M) further comprises:
a current mirror circuit (156_M), coupled between the preceding integrator (152_M) and the following integrator (154_M), configured to mirror the first integration current (IM_(M-1)) that is generated by the preceding integrator (152_(M-1)) in the adjacent receiving circuit (150_(M-1)) and accordingly generate a current difference (IM_M-IM_(M-1)) between the first integration current (IM_M) generated by the preceding integrator (152_M) in the same receiving circuit (150_M) and the first integration current (IM_(M-1)) generated by the preceding integrator (152_(M-1)) in the adjacent receiving circuit (150_(M-1));
wherein the second operational amplifier (OP) is configured to generate the second integration voltage based on the current difference (IM_M-IM_(M-1)).

13. The touch sensitive device (10, 20) of claim 10, **characterized in that** the preceding integrator (152_M, 152_(M-1)) further comprises:
a current buffer (158_M, 158_(M-1)), coupled to the first operational amplifier (OP), configured to generate a first non-inverted integration current (IP_M, IP_(M-1)) and
a first inverted integration current (IN_M, IN_(M-1)) based on outputs of the first operational amplifier (OP).

14. The touch sensitive device (10, 20) of claim 13, **characterized in that** each of the plurality of receiving circuit (150_M, 150_(M-1)) further comprises:
a current mirror circuit (159_M), coupled between the preceding integrator (152_M) and the following integrator (154_M), configured to:
mirror the first non-inverted integration current (IP_M) and the first inverted integration current (IN_M) that are generated by the preceding integrator (152_M) in the same receiving circuit (150_M);
inversely mirror the first non-inverted integration current (IP_(M-1)) and the first inverted integration current (IN_(M-1)) that are generated by the preceding integrator (152_(M-1)) in the adjacent receiving circuit (150_(M-1)); and
accordingly generate a current difference between a sum of the first non-inverted integration current (IP_M) and the first inverted integration current (IN_M) that are generated by the preceding integrator (152_M) in the same receiving circuit (150_M), and a sum of the first non-inverted integration current (IP_(M-1)) and the first inverted integration current (IN_(M-1)) that are generated by the preceding integrator (152_(M-1)) in the adjacent receiving circuit (150_(M-1));
wherein the second operational amplifier (OP) is configured to generate the second integration voltage based on the current difference.

15. The touch sensitive device (10, 20) of claim 8, **characterized in that** the touch panel (11, 21) is a mutual-capacitance touch panel or a self-capacitance touch panel.

## Amended claims

### Amended claims in accordance with Rule 137(2) EPC.

1. A touch sensing circuit (13, 23), comprising:
a plurality of receiving circuits (150_1-150_P, 250_1-250_P), each coupled to a respective one of a plurality of sensing electrodes (RX_1-RX_K) of a touch panel (11, 21), each of the plurality of receiving circuits (150_1-150_P, 250_1-250_P) comprising:
a preceding integrator (152_M), coupled to the respective one of the plurality of sensing electrodes (RX_M), wherein the preceding integrator (152_M, 152_(M-1)) comprises a first operational amplifier (OP) configured to generate a first integration voltage (VINT1_M, VINT1_(M-1)); and
a following integrator (154_M), coupled to the preceding integrator (152_M), wherein the following integrator (154_M, 154_(M-1)) comprises a second operational amplifier (OP) coupled to the first operational amplifier (OP) and configured to generate a second integration voltage based on the first integration voltage (VINT1_M) generated by the preceding integrator (152_M) in a same receiving circuit (150_M) and the first integration voltage (VINT1_(M-1)) generated by the preceding integrator (152_(M-1)) in an adjacent receiving circuit (150_(M-1)), and an analog-to-digital converter (155_M, 155_(M-1)) coupled to the second operational amplifier (OP) and configured to generate a digital value based on the second integration voltage; and
**characterized in that**
the preceding integrator (152_M, 152_(M-1)) further comprises a voltage-to-current converting circuit (153_M, 153_(M-1)), coupled to the first operational amplifier (OP), configured to generate a first integration current (IM_M, IM_(M-1)) by converting the first integration voltage; and
each of the plurality of receiving circuits (150_M) further comprises a current mirror circuit (156_M), coupled between the preceding integrator (152_M) and the following integrator (154_M), configured to mirror the first integration current (IM_(M-1)) that is generated by the preceding integrator (152_(M-1)) in the adjacent receiving circuit (150_(M-1)) and accordingly generate a current difference (IM_M-IM_(M-1)) between the first integration current (IM_M) generated by the preceding integrator (152_M) in the same receiving circuit (150_M) and the first integration current (IM_(M-1)) generated by the preceding integrator (152_(M-1)) in the adjacent receiving circuit (150_(M-1));
wherein the second operational amplifier (OP) is configured to generate the second integration voltage based on the current difference (IM_M-IM_(M-1)).

2. A touch sensitive device (10, 20), comprising:
a display panel (12);
a touch panel (11, 21) having a plurality of sensing electrodes (RX_1-RX_K); and
a touch sensing circuit (13, 23) according to claim 1.

3. The touch sensitive device (10, 20) of claim 2, wherein the touch panel (11, 21) is a mutual-capacitance touch panel or a self-capacitance touch panel.

4. A touch sensing circuit (13, 23), comprising:
a plurality of receiving circuits (150_1-150_P, 250_1-250_P), each coupled to a respective one of a plurality of sensing electrodes (RX_1-RX_K) of a touch panel (11, 21), each of the plurality of receiving circuits (150_1-150_P, 250_1-250_P) comprising:
a preceding integrator (152_M), coupled to the respective one of the plurality of sensing electrodes (RX_M), wherein the preceding integrator (152_M, 152_(M-1)) comprises a first operational amplifier (OP) configured to generate a first integration voltage (VINT1_M, VINT1_(M-1)); and
a following integrator (154_M), coupled to the preceding integrator (152_M), wherein the following integrator (154_M, 154_(M-1)) comprises a second operational amplifier (OP) coupled to the first operational amplifier (OP) and configured to generate a second integration voltage based on the first integration voltage (VINT1_M) generated by the preceding integrator (152_M) in a same receiving circuit (150_M) and the first integration voltage (VINT1_(M-1)) generated by the preceding integrator (152_(M-1)) in an adjacent receiving circuit (150_(M-1)), and an analog-to-digital converter (155_M, 155_(M-1)) coupled to the second operational amplifier (OP) and configured to generate a digital value based on the second integration voltage;
**characterized in that**
the preceding integrator (152_M, 152_(M-1)) further comprises a current buffer (158_M, 158_(M-1)), coupled to the first operational amplifier (OP), configured to generate a first non-inverted integration current (IP_M, IP_(M-1)) and a first inverted integration current (IN_M, IN_(M-1)) based on outputs of the first operational amplifier (OP); and
each of the plurality of receiving circuits (150_M, 150_(M-1)) further comprises a current mirror circuit (159_M), coupled between the preceding integrator (152_M) and the following integrator (154_M), configured to:
mirror the first non-inverted integration current (IP_M) and the first inverted integration current (IN_M) that are generated by the preceding integrator (152_M) in the same receiving circuit (150_M);
inversely mirror the first non-inverted integration current (IP_(M-1)) and the first inverted integration current (IN_(M-1)) that are generated by the preceding integrator (152_(M-1)) in the adjacent receiving circuit (150_(M-1)); and
accordingly generate a current difference between a sum of the first non-inverted integration current (IP_M) and the first inverted integration current (IN_M) that are generated by the preceding integrator (152_M) in the same receiving circuit (150_M), and a sum of the first non-inverted integration current (IP_(M-1)) and the first inverted integration current (IN_(M-1)) that are generated by the preceding integrator (152_(M-1)) in the adjacent receiving circuit (150_(M-1));
wherein the second operational amplifier (OP) is configured to generate the second integration voltage based on the current difference.

5. A touch sensitive device (10, 20), comprising:
a display panel (12);
a touch panel (11, 21) having a plurality of sensing electrodes (RX_1-RX_K); and
the touch sensing circuit (13, 23) according to claim 4.

6. The touch sensitive device (10, 20) of claim 5, wherein the touch panel (11, 21) is a mutual-capacitance touch panel or a self-capacitance touch panel.
